(19) Europäisches Patentamt / European Patent Office / Office européen des brevets

(11) **EP 3 194 503 B1**

(12) **EUROPÄISCHE PATENTSCHRIFT**

(45) Veröffentlichungstag und Bekanntmachung des Hinweises auf die Patenterteilung:
**20.06.2018  Patentblatt 2018/25**

(21) Anmeldenummer: **15770792.8**

(22) Anmeldetag: **09.09.2015**

(51) Int Cl.:
*C08L 83/06* (2006.01)   *C08G 77/04* (2006.01)
*C04B 26/14* (2006.01)   *C04B 26/16* (2006.01)
*C08G 18/10* (2006.01)   *C08K 5/544* (2006.01)
*C08K 5/548* (2006.01)   *C08L 63/00* (2006.01)
*C08L 83/08* (2006.01)   *C08L 75/00* (2006.01)
*C07F 7/18* (2006.01)

(86) Internationale Anmeldenummer:
**PCT/EP2015/001813**

(87) Internationale Veröffentlichungsnummer:
**WO 2016/041625 (24.03.2016 Gazette 2016/12)**

(54) **HÄRTERZUSAMMENSETZUNG FÜR ADDITIONSPOLYMERISATIONSBASIERTE BEFESTIGUNGSKUNSTMÖRTELSYSTEME, DESSEN VERWENDUNG UND HERSTELLUNG**

RADICALLY CURABLE SYNTHETIC RESIN COMPOSITION WITH OLIGOMERIC SILOXANE ADDITIVES.

MASSE DE RÉSINE SYNTHÉTIQUE DURCISSABLE PAR VOIE RADICALAIRE AVEC DES ADDITIFS DE SILOXANES OLIGOMÉRIQUES.

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.09.2014   DE 102014013695**
**15.07.2015   DE 102015111484**

(43) Veröffentlichungstag der Anmeldung:
**26.07.2017  Patentblatt 2017/30**

(73) Patentinhaber: **fischerwerke GmbH & Co. KG 72178 Waldachtal (DE)**

(72) Erfinder:
• **GRÜN, Jüngen**
**79268 Bötzingen (DE)**
• **VOGEL, Martin**
**79286 Glottertal (DE)**
• **SCHLENK, Christian**
**79211 Denzlingen (DE)**
• **WEINELT, Christian**
**79331 Teningen (DE)**

(56) Entgegenhaltungen:
**WO-A1-2013/174189     US-A1- 2011 190 420**

**Beschreibung**

Die Erfindung betrifft eine Härterzusammensetzung für (bei Verwendung) durch Additionspolymerisation härtende (bzw. vor Verwendung "härtbare") Befestigungskunstmörtelsysteme zum Einmörteln von Verankerungsmitteln in Löcher oder Spalten, insbesondere solchen auf Epoxidbasis und/oder auf Polyurethanbasis, diese Härterzusammensetzung beinhaltende Befestigungskunstmörtelsysteme, die Verwendung dieser Befestigungskunstmörtelsysteme zum Einmörteln von Verankerungsmitteln in Löcher oder Spalten sowie Herstellungs- und Verwendungsverfahren für die Befestigungskunstmörtelsysteme und die Härterzusammensetzung und weitere unten ersichtliche Erfindungsgegenstände.

Besonders gut geeignete Befestigungskunstmörtelsysteme sind solche auf der Basis von Epoxiden, wie insbesondere aus Glycidylverbindungen bestehend, und geeigneten Härtern. So ist FIS EM 390 S® (fischerwerke GmbH & Co. KG, Waldachtal, Deutschland) ein sehr erfolgreiches, auf dem Markt etabliertes Beispiel für ein zweikomponentiges Injektionsmörtelsystem zum Einmörteln von Verankerungselementen auf der Basis eines solchen Epoxidharzes in einer Komponente A und von Aminen als einem solchen Härter in einer weiteren Komponente B, daneben jeweils weiteren Bestandteilen in jeder Komponente.

Andere bekannte auf Additionspolymerisation beruhende Systeme sind solche auf Basis von Polyurethanen und/oder Polyharnstoffen.

Der Einsatz monomerer Silane (z.B. von Glycidylsilanen und/oder Aminosilanen) unter anderem als Haftvermittler in Beschichtungssystemen oder als Korrosionsschutzmittel ist bekannt (siehe z.B. US 2006/0135656 A1). WO 2013/174189 offenbart eine auf Polyurethan basierte Einmörtelzusammensetzung enthaltend ein Bis(Trimethoxysilylpropyl)amin als Kopplungsmittel. Doch haben monomere Silane mit hydrolysierbaren (z.B. siliciumgebundenen Alkoxy-) Gruppen den Nachteil, dass sie bei der Hydrolyse während der Verwendung enorme Mengen an flüchtigen organischen Verbindungen (VOC), z.B. Alkohole, freisetzen.

Daneben finden sich im Bereich der Befestigungskunstmörtelsysteme neue Einschränkungen für Hersteller auch für Befestigungskunstmörtel auf der Basis von Epoxidharzen, wonach insbesondere bestimmte niedermolekulare Verbindungen zu vermeiden sind, um z.B. gesundheitliche und/oder ökologische Risiken zu vermindern. Entsprechende gesetzliche Regelungen bzw. Rahmenbedingungen werden z.B. durch die Chemikalien- oder "REACH"-Verordnung (Verordnung (EG) Nr. 1907/2006) in Europa festgelegt. Vorteilhaft kann es z.B. sein, solche Härter- und Epoxidkomponenten zu verwenden, welche die Polymerdefinition gemäß REACH erfüllen, d.h., dass die Harze und bevorzugt auch bereits die Edukte eine Molekulargewichtsverteilung derart aufweisen, dass keine einzelne Molekülspezies zu mehr als 50 Gewichtsprozent vorliegt und gleichzeitig mehr als 50 Gewichtsprozent der Ketten aus mindestens 3n + 1 kovalent gebundenen Monomereinheiten zusammengesetzt sind.

Die bereits erwähnten gesetzlichen Regelungen führen dazu, dass immer weniger Amine ohne stärkere Einschränkungen bei der Formulierung von Härterzusammensetzungen für Epoxidharze im Befestigungsbereich verwendet werden können. Die verbleibenden Amine erlauben oft nur unzureichende Spielräume zum Einstellen gewünschter Eigenschaften (hohe Verbundspannung, hohe Auszugswerte, rasche Aushärtung, hohe Temperaturfestigkeit, Aushärtung auch bei niedriger Temperatur, Wasserunempfindlichkeit zur Anwendung im feuchten Substrat (z.B. feuchter Beton), chemische Beständigkeit und dergleichen mehr), die bei den Fertigprodukten anzustreben sind.

Insbesondere ein Erzielen geeigneter Verbundspannungen, aber auch das Verbessern ein oder mehrerer der übrigen genannten Eigenschaften durch Bereitstellen neuer Komponenten und insbesondere neuer Amin-Komponenten als Härter verbleiben daher als anzustrebende Ziele.

Zur Lösung der oben beschriebenen Probleme werden in einer allgemeinen Verkörperung der Erfindung Befestigungskunstmörtelsysteme, z.B. in Form 2- oder ferner 3-komponentiger Befestigungskits, mit Siloxanen vorgeschlagen, welche mittels einer Hydrolyse- und Kondensationsreaktion oligomerisiert sind. Durch die Oligomerisierung und die damit verbundene Funktionalitätserhöhung je Molekül (z.B. an Aminogruppen) kommt es nicht nur zu einer erhöhten Vernetzbarkeit, sondern auch - speziell bei Aminosilanen aufgrund deren basischen Charakters (die bereits in sich basisch katalysierend wirken) - zur Ausbildung von partikulären, raumvernetzten und vor allem engmaschigen, harten Si-O-Strukturen, wodurch beispielsweise die Vernetzungsdichte und die Glasübergangstemperatur nach dem Vernetzen erhältlicher Befestigungskunstmörtelsysteme gesteigert werden kann.

Vorzugsweise erfüllen die Härterzusammensetzungen und/oder die oligomerisierten Siloxane die oben beschriebene Polymerdefinition nach "REACH". Dadurch kann in bestimmten Fällen eine Verringerung von gefährlichen Eigenschaften (z.B. Reiz- und Ätzwirkung, Flüchtigkeit, Hautresorption, Umweltgefährlichkeit) und damit eine geringere Kennzeichnung erreicht werden. Die Oligomerisierung kann entweder vor dem Verpacken oder auch nach der Verpackung (z.B. in einer Kartusche) stattfinden, oder beides. Es resultiert insbesondere im ersteren Fall auch ein verringerter VOC-Gehalt, wodurch die Freisetzung ausgasender organischer Verbindungen verringert werden kann. Vorteilhaft ist weiter, dass im Vergleich zu anderen gängigen gemäß "REACH" polymeren Aminhärtern (z.B. Mannich-Basen, Bucherer-Addukte, Michael-Addukte, Additionsprodukte und dergleichen) oligomerisierte Siloxane tendenziell niedrigere Viskositäten aufweisen können. Ein besonderer und weiterer Vorteil ergibt sich aus der durch die Kondensation unterschiedlicher Silane (wie z.B. Aminosilanen mit Thiosilanen) mögliche interne Beschleunigung der Reaktion mit Kunstharzen auf Epoxid- und/oder Isocyanatbasis.

Im Einzelnen betrifft die Erfindung vor diesem Hintergrund die folgenden (erfindungsgemäßen) Ausführungsformen/Verkörperungen:

Eine erste Verkörperung der Erfindung betrifft eine Härterzusammensetzung für additionspolymerisationsbasierte Befestigungskunstmörtelsysteme zum Einmörteln von Verankerungsmitteln in Löcher oder Spalten, insbesondere solchen auf Basis von Reaktiv-Kunstharzen auf Epoxid- und/oder auf Isocyanatbasis, wobei die Härterzusammensetzung oligomere Siloxane mit im Durchschnitt pro Molekül mindestens einem oder vorzugsweise zwei oder mehreren, eine oder mehrere bei der Additionsreaktion mit Isocyanat- oder Epoxygruppen reaktive (sekundäre oder vorzugsweise primäre) Amino- und/oder Thiolgruppen (-SH) tragenden, organischen Resten und mit im Durchschnitt pro Molekül mindestens einer oder vorzugsweise mehr hydrolysierbaren Gruppen beinhaltet und daneben ein oder mehrere weitere übliche Zusätze beinhalten kann.

Eine weitere Verkörperung der Erfindung betrifft ein Befestigungskunstmörtelsystem zum Einmörteln von Verankerungsmitteln in Löcher oder Spalten, welches ein härtbares Reaktiv-Kunstharz auf Epoxid- und/oder Isocyanatbasis und eine Härterzusammensetzung beinhaltet, wobei die Härterzusammensetzung oligomere Siloxane mit im Durchschnitt je Molekül mehr als einem, vorzugsweise zwei oder mehreren, eine oder mehrere bei der Additionsreaktion mit Isocyanat- oder Epoxygruppen reaktive (sekundären oder vorzugsweise primären) Amino- und/oder Thiolgruppen tragenden, organischen Resten und mit im Durchschnitt pro Molekül einer oder vorzugsweise mehr hydrolysierbaren Gruppen beinhaltet, und daneben ein oder mehrere weitere übliche Zusätze beinhalten kann.

In einer weiteren Verkörperung betrifft die Erfindung die Verwendung eines gerade oder nachfolgend beschriebenen Befestigungskunstmörtelsystems zum Einmörteln von Verankerungsmitteln in Löcher und Spalten.

Noch eine weitere Verkörperung der Erfindung betrifft ein Verfahren oder eine Methode zum Befestigen von Verankerungselementen in Löchern oder Spalten, bei dem oder der ein vor- und nachstehend beschriebenes erfindungsgemäßes Befestigungskunstmörtelsystem und ein Verankerungsmittel nacheinander, insbesondere zuerst das Befestigungskunstmörtelsystem, dann das Verankerungsmittel, und/oder (mindestens im wesentlichen) gleichzeitig in ein Loch oder einen Spalt in einem Substrat eingebracht werden.

Weitere Verkörperungen der Erfindung betreffen die Herstellung eines erfindungsgemäßen Befestigungskunstmörtelsystems, insbesondere (i) unter Herstellung einer erfindungsgemäßen wie vor- oder nachstehend beschriebenen Härterzusammensetzung und insbesondere weiter (ii) unter Verwendung einer erfindungsgemäßen vor- oder nachstehend beschriebenen Härterzusammensetzung.

Noch ein weiterer Gegenstand der Erfindung betrifft die Verwendung einer erfindungsgemäßen Härterzusammensetzung wie vor- und nachstehend definiert zur Herstellung eines vor- und nachstehend definierten erfindungsgemäßen Befestigungskunstmörtelsystems, insbesondere dadurch gekennzeichnet, dass die Härterzusammensetzung und ein durch Additionshärtung härtbares Reaktiv-Kunstharz, insbesondere auf Epoxid- und/oder Isocyanatbasis als Bestandteil von Komponenten eines Mehr-, insbesondere Zwei-Komponentensystems, bereitgestellt werden. Auch die Verwendung einer erfindungsgemäßen Härterzusammensetzung als Härter in einem vor- und nachstehend definierten Befestigungskunstmörtelsystem bildet einen Erfindungsgegenstand..

Es hat sich überraschenderweise gezeigt, dass nicht nur relativ hohe Anteile der Siloxanzusätze in Härterzusammensetzungen, sondern auch der - hinsichtlich der Verwendung als Härter - alleinige Einsatz der oligomeren Siloxane in erfindungsgemäßen Befestigungskunstmörtelsystemen als Härter, möglich sind. Auch kann durch die oligomeren Siloxane, ohne durch diesen Erklärungsversuch abschließend gebunden sein zu wollen, ein verbesserter Kontakt zur benetzten Substratoberfläche im Loch oder Spalt, sei es im Form- und/ oder im Stoffschluss, ermöglicht werden.

Überraschenderweise zeigen sich auch besonders gute Eigenschaften der erfindungsgemäßen Befestigungskunstmörtelsysteme hinsichtlich der Leistungsfähigkeit in der Zugzone, also im gerissenen Beton, unter Verwendung von normalen Gewindestangen. Auch andere mechanische Eigenschaften können positiv beeinflusst werden, wie beispielsweise die Maximalbruchdehnung und das Zugmodul.

Bei den ausgehärteten Massen handelt es sich so bevorzugt um hochfeste, wenig flexible Festkörper mit einem Zugmodul > 0,5 GPa, bevorzugt > 1 GPa, einer Zugfestigkeit von > 1 MPa, bevorzugt > 5 MPa und einer Bruchdehnung < 10 %, bevorzugt < 5 %, insbesondere < 2 % (alle drei Größen gemessen nach DIN EN ISO 527 und einer Druckfestigkeit von > 5 MPa, bevorzugt > 10 MPa, insbesondere > 50 MPa oder > 80 MPa (gemessen nach DIN EN ISO 604).

Die Bruchdehnung wird genauer gemäß DIN EN ISO 527-1 an Schulterstäben des Probekörpertyps 1 BA (nach DIN EN ISO 527-2) bestimmt nach 7 Tagen Lagerung bei Raumtemperatur.

Schließlich kann auch nach den Verfahren gemäß den Leitlinien von der European Organisation for Technical Approvals (EOTA) (2001): ETAG N° 001 Ausgabe November 2006, Leitlinie für die europäische technische Zulassung für Metalldübel zur Verankerung im Beton, Teil 5: Verbunddübel, Februar 2008 eine gegenüber entsprechenden Befestigungskunstmörtelsystemen ohne Siloxanzusatz erhöhte Leistungsfähigkeit im gerissenen Beton gefunden werden.

Weitere (auch allgemein für andere als die exemplifizierten hier offenbarten Befestigungskunstmörtelsysteme) generell anwendbare Messmethoden finden sich in den Beispielen.

Mittels der vorstehenden und nachfolgenden Definitionen können vor- und nachstehend ein, mehrere oder alle verwendeten breiteren Merkmale, Begriffe oder Symbole durch die jeweils spezielleren genannten Merkmale, Begriffe oder Symbole ersetzt werden, was zu bevorzugten Ausführungsformen der Erfindung führt.

Wo Gewichtsangaben in Prozent (Gew.-%) gemacht werden, beziehen sich diese, wenn nichts anderes gesagt ist, auf die Gesamtmasse der Reaktanden und Zusätze des Befestigungskunstmörtelsystems (also die in der nach dem Mischen auszuhärtenden Masse vorhandenen Bestandteile ohne Verpackung und andere mögliche Teile wie Statikmischer oder dergleichen).

Bei den oligomeren Siloxanen mit im Durchschnitt je Molekül (bezogen nur auf die Siloxanoligomere) mehr als einem, beispielsweise zwei oder mehreren, eine oder mehrere bei der Additionsreaktion mit Isocyanat- oder Epoxygruppen reaktive (sekundären oder vorzugsweise primären) Amino- und/oder Thiolgruppen tragenden, organischen Resten und mit im Durchschnitt pro Molekül Oligomer einer oder vorzugsweise mehr hydrolysierbaren Gruppen, handelt es sich um mit Amino- und/oder Thiolgruppen funktionalisierte Siloxanoligomere, die je Molekül Oligomer mindestens eine (vorzugsweise zwei oder mehr) Amino- und/oder Thiolgruppe sowie mindestens eine, vorzugsweise mindestens zwei hydrolysierbare an Silicium gebundene Gruppen aufweisen. Sie weisen Si-O-vernetzte Strukturelemente auf, die mindestens eine Struktur ausgewählt aus kettenförmigen, cyclischen, vernetzten und gegebenenfalls raumvernetzten Strukturen ausbilden, und sie beinhalten vorzugsweise mindestens eine Struktur in idealisierter Form der allgemeinen Formel (I),

$$(R^1O)[(R^1O)_{\{2-(a+e)\}}(R^2)_aSi(A)_eO]_b\text{-}[Si(Y)_2O]_c\text{-}[Si(B)_e(R^4)_d(OR^3)_{\{2-(d+e)\}}O]_fR^3 \qquad (I)$$

wobei die Strukturelemente sich von Alkoxysilanen ableiten und

A und B jeweils unabhängig voneinander mindestens eine (primäre oder sekundäre) Amino- und/oder Thiolgruppe beinhaltendes (vorzugsweise $C_1$-$C_7$-) Alkyl bedeuten;

Y für $OR^5$ und/oder $R^5$ steht oder in vernetzten und gegebenenfalls raumvernetzten Strukturen unabhängig voneinander $OR^5$, $R^5$ oder $O_{0,5}$ bedeutet; vorzugsweise ist Y gleich $OR^5$;

die Reste $R^1$, $R^2$, $R^3$, $R^4$ und $R^5$, jeweils für sich und untereinander unabhängig voneinander, einen unsubstituierten oder ferner substituierten - gegebenenfalls ferner Heteroatome aufweisenden - linearen, verzweigten oder cyclischen Alkylrest mit 1 bis 20 Kohlenstoffatomen bedeuten;

und a, b, c, d, e und f, bezogen auf eine Struktureinheit, unabhängig voneinander ganze Zahlen bedeuten, wobei a gleich unabhängig voneinander 0 oder 1 oder 2;

b gleich 1 oder größer;

c gleich 0 oder größer;

d gleich unabhängig voneinander 0 oder 1 oder 2;

e gleich unabhängig voneinander 1 oder 2; und

f gleich 0 oder größer ist, beispielsweise (bezogen nur auf die Oligomermoleküle) gleich 1 oder größer,

mit der Maßgabe, dass b + c + f gleich oder größer als 2, beispielsweise gleich 2,001 oder größer ist.

Die Grenzen ergeben sich durch die Vierbindigkeit von Silicium

Dabei müssen bei Vorliegen von mehr als einem Strukturelement (A1) gleich $-[(R^1O)_{\{2-(a+e)\}}(R^2)_aSi(A)_eO]_b$-(b > 1) und/oder (A2) gleich $-[Si(B)_e(R^4)_d(OR^3)_{\{2-(d+e)\}}O]_f$- (f > 1) und/oder (A3) gleich $-[Si(Y)_2O]_c$- (c >1) die genannten Strukturelemente - nicht wie in Formel I dargestellt - jeweils aufeinanderfolgend angeordnet sein, sondern können auch statistisch verteilt sein (z.B. rein illustrierend und nicht limitierend A1-A1-A3-A1 A2-A1-A3).

Besonders bevorzugt beinhalten die erfindungsgemäß eingesetzten oligomeren Siloxane ein oder mehrere Verbindungen mit mindestens einer Struktur in idealisierter (statistisch gemittelter) Form der allgemeinen Formel (IA),

$$(R^1O)[(R^1O)_{(2-e)}(R^2)_aSi(A)_eO]_b\text{-}R^1 \qquad (IA)$$

wobei in einer weiter bevorzugten Ausführungsform alle Reste $R^1$ je Molekül identisch sein können;

wobei auch Mischungen von zwei oder mehr Verbindungen der Formel (IA) mit unterschiedlichen Resten $R^1$ möglich sind; und die A-Gruppen unabhängig von anderen A-Gruppen im selben oder anderen Molekülen die oben definierten unterschiedlichen funktionellen Gruppen (Amino bzw. Thio oder beides) und unterschiedliche Funktionalitäten aufweisen können,

wobei in den Verbindungen der Formel (IA) $R^1$, $R^2$, a und e wie oben für Strukturen der Formel I definiert sind und im Mittel b gleich oder größer als 2,000 ist.

Ferner können die erfindungsgemäß verwendeten oligomeren Siloxane auch ergänzend Trialkylsilangruppen aufweisen wie Trimethylsilan- oder Triethylsilangruppen, beispielsweise durch Herstellung unter Verwendung von Alkoxytrialkylsilan, was ermöglicht, den Oligomerisierungsgrad einzustellen: Die Alkoxytrialkylsilane können, beispielsweise zu einem bestimmten Zeitpunkt zugesetzt, einen Kettenabbruch bewirken.

"Beinhalten" oder "umfassen" bedeutet, dass neben den genannten Komponenten oder Merkmalen noch andere vorhanden sein können, steht also für eine nicht abschließende Aufzählung, im Gegensatz zu "enthalten", das eine abschließende Aufzählung der bei seiner Verwendung aufgezählten Komponenten oder Merkmale bedeutet.

Wo das Attribut "ferner" erwähnt wird, bedeutet dies, dass Merkmale ohne dieses Attribut stärker bevorzugt sein können.

Unter Si-gebundenen hydrolysierbaren Gruppen sind insbesondere solche Gruppen zu verstehen, die ausgewählt sind aus der Gruppe, die aus Halogen, wie Chloro, Acyloxy, Aryloxy, Aralkyloxy (= Arylalkyloxy) und insbesondere Alkoxy besteht. Besonders bevorzugt sind Methoxy oder Ethoxy.

(M)ethoxy steht für Methoxy, Ethoxy oder Methoxy und Ethoxy (als Gemisch).

Bei den bei der Additionsreaktion mit Isocyanat- oder Epoxygruppen reaktiven (sekundären oder vorzugsweise primären) Amino- und/oder Thiolgruppen tragenden organischen Resten handelt es sich vorzugsweise um organische Reste mit 1 bis 20 Kohlenstoffatomen im Grundkörper, vorzugsweise mit 2 bis 10 und insbesondere mit 1 bis 7 Kohlenstoffatomen, die aromatisch, alicyclisch oder aliphatisch (dann Alkyl) sein können und die ein oder mehrere (beispielsweise 1 bis 3) Thiol-, primäre Amino- und/oder sekundäre Aminogruppen (beispielsweise R-NH-, worin R (insbesondere $C_1$-$C_7$) Alkyl, Phenyl- $C_1$-$C_7$-Alkyl, Cycloalkyl oder Cycloalkyl- $C_1$-$C_7$-alkyl ist) als funktionelle Gruppen tragen. Besonders bevorzugt sind mehrere oder insbesondere ein derartige Thiol-, primäre Amino- und/oder sekundäre Aminogruppen tragendes Amino-(insbesondere $C_1$-$C_7$-) Alkyl oder Mercapto (insbesondere $C_1$-$C_7$-) Alkyl. Beispiele für bevorzugte derartige Reste sind 3-Aminopropyl, N-(2-Aminoethyl)-3-aminopropyl, N-Cyclohexyl-3-aminopropyl, N-Cyclohexylaminomethyl, N-Phenylaminomethyl, N-Cyclohexylaminomethyl, 3-[2-(2-Aminoethylamino)ethylamino]propyl, und 3-Mercaptopropyl.

Bevorzugte Edukte für die Herstellung dieser oligomeren Siloxane umfassen N-(2-Aminoethyl)-3-aminopropyltri(m)ethoxysilan, N-(2-Aminoethyl)-3-aminopropylmethyl-di(m)ethoxysilan, 3-Aminopropyltri(m)ethoxysilan, N-Cyclohexyl-3-aminopropyltri(m)ethoxysilan, 3-Mercaptopropyltri(m)ethoxysilan, Phenylaminomethyltri(m)ethoxysilan, Phenylaminopropyltri(m)ethoxysilan, oder 3-[2-(2-Aminoethylamino)ethylamino]propyltri(m)ethoxysilan, oder Kombinationen von zwei oder mehr davon.

Als bevorzugte Ausgangsstoffe der Formel IV sind folgende zu nennen:

Sämtliche Silane, die in dem Siloxanoligomer zur Ausbildung von D-, T- und Q-Struktureinheiten führen. Zur genaueren Nomenklatur der Benennung solcher Siloxanstrukturen sei auf das "Römpp Chemielexikon" - Stichwort: Silicone - hingewiesen.

In Ergänzung zu den oligomeren Siloxanen können die erfindungsgemäßen Befestigungskunstmörtelsysteme (beispielsweise zur Einstellung einer geeigneten Viskosität) auch monomere Silanzusätze als (mindestens zum Teil) reaktive Verdünner beinhalten. Die monomeren Silane können beispielsweise aus der Gruppe, die insbesondere aus N-(2-Aminoethyl)-3-aminopropyltri(m)ethoxysilan, N-(2-Aminoethyl)-3-aminopropylmethyl-di(m)ethoxysilan, 3-Aminopropyltri(m)ethoxysilan, N-Cyclohexyl-3-aminopropyltri(m)ethoxysilan, 3-Mercaptopropyltri(m)ethoxysilan, Phenylaminomethyltri(m)ethoxysilan, Phenylaminopropyltri(m)ethoxysilan, oder 3-[2-(2-Aminoethylamino)ethylamino]propyltri(m)ethoxysilan, und/oder Tetraalkoxysilan, wie Tetraethoxysilan, Tetramethoxysilan oder Tetrapropoxysilan oder Alkoxypolysilikat, wie Ethyl- oder Propylpolysilikat; besteht; oder Gemischen von zwei oder mehr davon, ausgewählt sein und können auch nicht umgesetzte Edukte sein.

Die Siloxane (insbesondere die oligomeren erfindungsgemäßen Siloxane) können beispielsweise, bezogen auf das gesamte Befestigungskunstmörtelsystem, in einem Gewichtsanteil von bis (höchstens) 50 Gew.-%, insbesondere von 0,001 bis 50 Gew.-%, wie von 0,01 bis 30 Gew.-%, z.B. von 0,1 oder mehr Gew.-%, wie von 0,5 bis 20 oder bis 15 Gew.-%, von 1 oder mehr Gew.-%, wie von 2 bis 20 oder bis 10 Gew.-%, oder von 3 oder mehr Gew.-%, z.B. von 3 bis 20 oder bis 6 Gew.-%, vorgesehen sein.

Bei sekundärem Amino handelt es sich beispielsweise um einen Rest der Formel Q-NH-, in dem Q einen unsubstituierten oder substituierten Rest ausgewählt aus $C_1$-$C_7$Alkyl (insbesondere Methyl, Ethyl oder Propyl), $C_3$-$C_7$-Cycloalkyl (insbesondere Cyclohexyl) oder $C_6$-$C_{12}$-Aryl (insbesondere Phenyl) bedeutet. Als Substituenten können Amino, Thio oder Hydroxy vorkommen.

Wo Heteroatome erwähnt werden (auch bei heteroaliphatischen oder heterocycloaliphatischen Verbindungen, die beispielsweise 1 bis 20 Ketten- bzw. 3 bis 20 Ringatome aufweisen können), handelt es sich vorzugsweise um 1 bis 3 Heteroatome, die unabhängig voneinander aus O, S und N ausgewählt sind.

Bei den additionspolymerisationsbasierten Befestigungskunstmörtelsystemen handelt es sich in erster Linie um Reaktiv-Kunstharze auf der Basis von Epoxiden und/oder von Isocyanaten.

Die bei der Verwendung von bzw. in erfindungsgemäßen Befestigungskunstmörtelsystemen verwendbaren Reaktiv-Kunstharze auf Epoxidbasis beinhalten eine Epoxidkomponente, vorzugsweise auf Basis von Glycidylverbindungen, beispielsweise solchen mit einer durchschnittlichen Glycidylgruppenfunktionalität von 1,5 oder größer, insbesondere von 2 oder größer, z.B. von 2 bis 10, die optional weitere(n) Glycidylether als Reaktivverdünner beinhalten kann. Bei den Epoxiden der Epoxidkomponente han¬delt es sich vorzugsweise um Poly(einschließlich Di)-glycidylether von mindestens einem mehrwertigen Alkohol oder Phenol, wie Novolak, Bisphenol F oder Bis-phenol A, oder Gemische solcher Epoxide, beispielsweise erhältlich durch Umsetzung der entsprechenden mehrwertigen Alkohole mit Epichlorhydrin. Beispiele sind Hexandioldiglycidylether, Trimethylolpropan-triglycidylether, Novolak-Epoxidharze, Bisphenol-A-Epichlorhydrinharze und/oder Bisphenol-F-Epichlor¬hydrinharze, beispielsweise mit einem durchschnittlichen Molekulargewicht von ≤ 2000. Die Epoxidharze können beispielsweise ein Epoxidäquivalent von 120 bis 2000, vor-zugsweise 150 bis 400, wie insbesondere 155 bis 195, beispielsweise 165 bis 185 aufweisen. Der Anteil der Epoxidkomponente an der Gesamtmasse der Reaktanden und Zusätze des Injektions-Kunstmörtelsystems beträgt vorzugsweise 5 bis unter 100 Gew.-%, insbesondere 10 bis 80 Gew.-%, 10 bis 70 Gew.-% oder 10 bis 60 Gew.-%. Möglich sind auch Gemische von zwei oder mehr solcher Epoxid-Komponenten. Geeignete Epoxidharze, Reaktivverdünner und Härter sind auch in dem Standardwerk von Lee H und Neville K, "Handbook of Epoxy Resins" (New. York: McGraw-Hill), 1982 zu finden. Wichtige Beispiele für weitere Inhaltsstoffe sind ein oder mehrere ausgewählt aus Beschleunigern, reaktiven Verdünnern, Thixotropiermitteln, Füllstoffen und weiteren Additiven.

Als Beschleuniger können z.B. tert-Amine, wie Imidazole oder tert-Aminophenole, wie Tris-2,4,6-dimethylaminomethylphenol, Organophosphine oder Lewis-Basen oder -Säuren, wie Phosphorsäureester, oder Gemische von zwei oder mehr davon, in einer oder (insbesondere bei Mehrkomponentensystemen) bei mehreren der Komponenten, bevorzugt jeweils in einer Härterkomponente, beinhaltet sein, beispielsweise in einem Gewichtsanteil von 0,001 bis 15 Gew.-%. Als Thixotropiermittel können übliche Rheologiehilfsmittel verwendet werden, wie pyrogene Kieselsäure. Sie können z.B. in einem Gewichtsanteil von 0,001 bis 50 Gew.-%, beispielsweise von 1 bis 20 Gew.-%, zugesetzt werden.

Als Füllstoffe finden übliche Füllstoffe, insbesondere Zemente (z.B. Portlandzemente oder Tonerdeschmelzzemente), Kreiden, Sand, Quarzsand, Quarzmehl oder dergleichen, die als Pulver, in körniger Form oder in Form von Formkörpern zugesetzt sein können, Verwendung, oder andere, wie beispielsweise in WO 02/079341 und WO 02/079293 genannt oder Gemische davon, wobei die Füllstoffe ferner oder insbesondere auch silanisiert sein können, beispielsweise als amino- oder epoxysilanbehandeltes Quarzmehl, wie Silbond AST oder EST® der Fa. Quarzwerke GmbH, als amino- oder glycidyl-silanbehandelte Kieselerde, wie Aktisil AM oder EM® von Hoffmann Mineral, oder amino- oder glycidyl-silan-behandelte pyrogene Kieselsäuren. Die Füllstoffe können in einer oder in mehreren Komponenten beispielsweise eines erfindungsgemäßen Mehrkomponentenkits, beispielsweise einer oder beiden Komponenten eines entsprechenden Zweikomponentenkits, vorhanden sein; der Anteil an Füllstoffen beträgt vorzugsweise 0 bis 90 Gew.-%, beispielsweise 10 bis 90 Gew.-% Zusätzlich oder alternativ können hydraulisch härtbare Füllstoffe, wie Gips, Branntkalk oder Zement (z.B. Tonerd- oder Portlandzement), Wassergläser oder aktive Aluminiumhydroxide, oder zwei oder mehr davon, zugesetzt werden.

Auch weitere Additive können zugesetzt sein, wie Weichmacher, nicht reaktive Verdünnungsmittel, Flexibilisatoren, Rheologiehilfsmittel, wie Thixotropierungsmittel, z.B. pyrogene Kieselsäure, Antistatikmittel, Verdickungsmittel, Netzmittel, Weichmacher wie Phthalsäure- oder Sebacinsäureester, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon.

Derartige weitere Zusätze können vorzugsweise insgesamt in Gewichtsanteilen von insgesamt 0 bis 90 %, beispielsweise von 0 bis 40 Gew.-%, zugesetzt bzw. vorhanden sein. Bestimmte der bei der Definition der Epoxide genannten Verbindungen, wie Trimethylolpropantriglycidylether oder Hexandioldiglycidylether, die eine geringere Viskosität als aromatische Gruppen enthaltende Epoxide aufweisen, können auch als reaktive Verdünner eingesetzt werden, beispielsweise in einem Gewichtsanteil von 0,1 bis 90 Gew.-%, z.B. zwischen 0,5 und 75 Gew.-% oder zwischen 1 und 40 Gew.-%. Möglich sind auch Gemische von zwei oder mehr solcher Reaktivverdünner unterschiedlicher Molekülsstruktur und insbesondere unterschiedlicher Funktionalität.

Der Härter beinhaltet entweder nur die erfindungsgemäßen oligomeren Siloxane oder zusätzlich mindestens eine weitere zur Epoxidhärtung gebräuchliche Verbindung (Reaktionspartner bei der Polyaddition). Der Begriff "Härter" bedeutet dabei vorzugsweise mindestens eine zur Epoxidhärtung gebräuchliche Verbindung mit oder ohne Füllstoffzusatz und/oder weitere Zusätze, Verdickungsmittel und/oder weitere Zusatzstoffe, wie Farbstoffe und dergleichen, mit anderen Worten, die komplette Härterkomponente. Der Härter kann als separate Komponente und/oder (insbesondere in geschützter Form, d.h. z.B. in mikroverkapselter Form) auch in der Reaktionsharzformulierung (als eine härtbare Komponente, d.h. einer solchen, die nach Mischung mit dem Reaktiv-Kunstharz auf Epoxidbasis nach Aufbrechen der Hülle der Mikrokapsel durch Polymerisation aushärtet) eingearbeitet sein. Übliche Zusätze können zugesetzt sein, wie z.B. Füllstoffe (insbesondere wie oben definiert) und/oder (insbesondere zur Herstellung einer Paste oder Emulsion) Lösungsmittel, wie Benzylalkohol. (z.B. Rest-)Wassergehalte sind hier ebenfalls nicht unbedingt ausgeschlossen. Auch hier können weitere Zusätze/Additive während der Lagerung hinzutreten, wie Gase, oder insbesondere Stoffe und/oder Stoffgemische im gasförmigen Aggregatzustand. Die weiteren Zusätze bzw. Zusatzstoffe der Härterkomponente eines erfindungsgemäßen Mehrkomponentensystems können beispielsweise in einem Gewichtsanteil von insgesamt 0,001, oder 0,01, bis 70 Gew.-%, z.B. von 1 bis 40 Gew.-% bezogen auf die Härterkomponente zugesetzt werden.

Bei den gewünschtenfalls ergänzend zu den erfindungsgemäß verwendeten oligomeren Siloxanen zur Epoxidhärtung gebräuchlichen Verbindungen (die als Reaktionspartner bei der Polyaddition fungieren) handelt es sich insbesondere um solche mit zwei oder mehr Gruppen ausgewählt aus Amino, Imino, und Mercapto, beispielsweise entsprechende Amine (bevorzugt), Thiole, oder Aminothiole, oder Gemische davon, beispielsweise wie in Lee H and Neville K, "Handbook of Epoxy Resins" (New. York: McGraw-Hill), 1982, genannt, welches hier diesbezüglich durch Bezugnahme aufgenommen wird, beispielsweise darin genannte Di- oder Polyamine, und/oder Di- oder Polythiole. Vorzugsweise weisen die zur Epoxidhärtung gebräuchlichen Verbindungen keine Kautschukmodifikation (beispielsweise aminofunktionalisierte Butadien- oder Butadien-Acrylonitril-Polymere) auf.

Die zur Epoxidhärtung (allgemein) gebräuchlichen (zusätzlichen) Verbindungen umfassen beispielsweise in einer Ausführungsform der Erfindung

- Di- oder Polyamine wie insbesondere aliphatische (wie Ethylendiamin), heteroaliphatische (wie 4,9-Dioxadodecan-1,12-diamin), cycloaliphatische (wie 1,3-Bis(aminomethyl)cyclohexan), cycloheteroaliphatische (wie Aminoethylpiperazin), araliphatische (wie meta-Xylylendiamin) und aromatische Di- oder Polyamine, Amidoamine, Aminaddukte, Polyetherdiamine oder Polyphenyl/Polymethylen-polyamine, Mannich-Basen (insbesondere wie in der Druckschrift EP0645408B1 und WO 2005/090433, vor allem auf den Seiten 3, letzter, bis S. 6, 2. Absatz offenbart, wie in Beispiel 1 oder insbesondere 2 davon, alleine oder im Gemisch mit ein oder mehreren weiteren Di- oder Polyaminen), Amine gemäß der bisher noch nicht veröffentlichten deutschen Patentanmeldung DE 10 2013 113 465.3 und EP0824124A1, Polyamide und dergleichen; - Di- oder Polythiole z.B.: ethoxylierte und/oder propoxylierte Alkohole aus Mono-, Di-, Tri-, Tetra-, Pentaolen und/oder anderen Polyolen mit Thiolendgruppen (z.B. Capcure 3-800 der Firma Cognis) und/oder Estergruppen beinhaltenden Thiolen. Beispielsweise kann es sich um Ester von $\alpha$-Mercaptoacetat oder $\beta$-Mercaptopropionat mit Diolen, Triolen, Tetraolen, Pentaolen oder anderen Polyolen handeln.

Es können auch Mischungen von zwei oder mehr der genannten zur Epoxidhärtung gebräuchlichen Verbindungen verwendet werden bzw. beinhaltet sein.

Die zur Epoxidhärtung gebräuchlichen zusätzlichen bzw. ergänzenden Verbindungen, falls vorhanden, sind vorzugsweise in Mengen von bis zu 95 Gew.-%, vorzugsweise von 2 bis 70 Gew.-%, bezogen auf die Gesamtmasse der Reaktanden und Zusätze der auszuhärtenden Masse des Befestigungskunstmörtelsystems vorgesehen.

Bezogen auf die Härterkomponente liegt der Anteil dieser Verbindungen in einer möglichen bevorzugten Ausführungsform der Erfindung bei 1 bis 95 Gew.-%, beispielsweise bei 3 bis 90 Gew.-%, z.B. 4 bis 95 Gew.-%, 5 bis 90 Gew.-% oder 10 bis 80 Gew.-%., oder sie fehlen (0 Gew.-%).

Die bei der Verwendung von bzw. in erfindungsgemäßen Befestigungskunstmörtelsystemen ferner verwendbaren Reaktiv-Kunstharze auf Isocyanatbasis sind ausgewählt aus in der Polyurethan- und/oder Polyharnstoffchemie üblichen (monomeren und/oder oligomeren und/ oder polymeren (z.B. mehrkernigen)) Mono-, Di-, oder Polyisocyanaten und Isocyanat-Präpolymeren.

Zu den geeigneten Isocyanaten zählen insbesondere Aryl-di- oder Arylpolyisocyanate, beispielsweise TDI (Toluoldiisocyanat, wie Toluol-2,4- oder -2-6-diisocyanat), Diisocyanatodiphenylmethan, vorzugsweise MDI oder insbesondere PMDI (Produkt von (insbesondere technischem) MDI, in dem zusätzlich zu den beiden Biphenyleneinheiten in MDI weitere Phenylen- und/oder Phenylenisocyanatreste vorliegen, was erhöhtes Molekulargewicht, höhere Viskosität und vorteilhafterweise einen geringen Dampfdruck und damit geringe gesundheitliche Belastung ermöglicht), 4,4'-Isopropylidendiphenylisocyanat, 2,4,4'-triisocyanato-diphenylmethan und Xylol-1,3- oder -1,4-diisocyanat.

Di- oder Polyisocyanate sind ferner aliphatische, cycloaliphatische oder die genannten oder andere als die bereits genannten aromatische Di- oder Poly-, vor allem Di-, Tri- oder Tetraisocyanate, insbesondere Hexandiisocyanat, 4,4'-Diisocyanatodicyclohexylmethan, Isophorondiisocyanat, 1-Methylcyclohexan-2,4- oder -2,6-diisocyanat, 3-Isocyanatomethyl-3,5,5-trimethylcyclohexylisocyanat; oder Rohpolyisocyanate; oder Präpolymere mit zwei oder mehr Isocyanatogruppen; oder Gemische von zwei oder mehr der genannten Di- oder Polyisocyanate. Besonders bevorzugt sind Isocyanate mit einer mittleren NCO-Funktionalität von 2-5.

Die zuletzt genannten Präpolymere mit zwei oder mehr Isocyanatogruppen sind insbesondere solche, die durch Reaktion ausgehend von Di- oder Polyisocyanaten, insbesondere den im letzten Absatz genannten außer den Präpolymeren selbst, mit jeweils di- oder höherfunktionalen Alkoholen (Di- oder Polyolen), Aminen, Aminoalkoholen, Thiolen, Aminothioalkoholen, Aminothiolen oder Amino-, Thio- und Hydroxy tragenden Alkanen, oder Gemischen von zwei oder mehr davon, entstehen. Beispiele für Polyisocyanat-Präpolymere finden sich in der WO 02/079341 A.

Die Isocyanate können auch teilweise oder ganz in Form mindestens teilweise durch Reaktion untereinander als Biuret-, Allophanat-, Uretdion-, Isocyanurat-, Iminooxadiazindion- und/oder Uretonimin-Gruppen vorliegende Isocyanatreste tragender Harze vorliegen.

Der Anteil der monomeren und/oder oligomeren und/oder polymeren (z.B. mehrkernigen) Di- oder Polyisocyanate liegt beispielsweise in einer möglichen bevorzugten Ausführungsform der Erfindung bis 90 Gew.-%, z.B. bei 10 bis 90 Gew.-%, z.B. zwischen 30 und 70 Gew.-%.

Die für beispielsweise Polyurethane, Polyharnstoffe und Polyurethan/Polyharnstoff-Mischpolymere erforderlichen Härter, nämlich Polyole, Polyamine, Polymercaptane und Polyaminoalkohole oder weitere oben als Härter bei den Präpolymeren genannte Verbindungen bzw. Isocyanate selbst, sind bekannt, beispielsweise entsprechen sie den oben für die Bildung von Präpolymeren oder den in der WO 02/079341 und der WO 02/079293 genannten Di- oder höherwertigen Alkoholen, Mercaptanen, Aminen usw., bzw. Di- oder Polyisocyanaten. Die Komponenten für isocyanatbasierte Kunstharze können vorbeschleunigt sein mit üblichen Vorbeschleunigern.

Weitere Zusätze wie Füllstoffe, Additive, Beschleuniger, Thixotropierhilfsmittel usw. - wie oben für Epoxidharze definiert - können in Mengen wie für diese definiert enthalten sein. Härter (sowohl im Falle der Epoxide als auch im Falle der Isocyanate) können in einem Anteil von 10 bis 80, beispielsweise von 25 bis 70 Gew.-%, vorliegen.

"Reaktiv-Kunstharz auf Epoxidbasis" oder "Reaktiv-Kunstharz auf Isocyanatbasis" bedeutet insbesondere, dass die erfindungsgemäßen Befestigungskunstmörtelsysteme neben den bisher genannten Bestandteilen auch weitere übliche Bestandteile (z.B. Additive oder andere oben oder unten genannte Bestandteile) beinhalten können. Diese weiteren Bestandteile können beispielsweise in einer Menge von insgesamt bis zu 80, vorzugsweise zwischen 0,01 und 65 Gew.-%, vorliegen. Auch wo nicht ausdrücklich "auf Basis" erwähnt wird, sind derartige übliche Bestandteile mit beinhaltet.

Unter einem Loch oder Spalt ist ein solches Loch oder ein solcher Spalt zu verstehen, das oder der in einem festen (insbesondere bereits als solcher fertiggestellten) Untergrund (Substrat), insbesondere Mauerwerk oder Beton, ggf. auch in einem rissigen Substrat, wie rissigem Beton, vorhanden und von mindestens einer Seite her zugänglich ist, beispielswiese ein Bohrloch, oder ferner ein beim Mörteln mit anorganischen Mörtel- oder Putzmassen (wie mit Zement oder Gips) ausgesparter Bereich oder dergleichen.

In einer besonderen und vorteilhaften Ausführungsform der Erfindung sind die härtbaren Komponenten und die zugehörigen Härter (Härterkomponenten) voneinander getrennt in einem Zwei- oder Mehrkomponentensystem aufbewahrt, bevor sie am gewünschten Ort (z.B. bei oder in einem Loch oder Spalt, wie Bohrloch) miteinander vermischt werden.

Die erfindungsgemäßen Befestigungskunstmörtelsysteme sind dann als Mehr-Komponentensysteme (z.B. Mehrkomponentenkit) vorgesehen und werden auch als solche verwendet.

Unter einem Mehrkomponentenkit ist insbesondere ein Zwei- oder (ferner) Mehrkomponentenkit (vorzugsweise ein Zweikomponentenkit) mit einer Komponente (A), welche entweder ein oder mehrere durch Polyaddition härtbare (= nach Zugabe mindestens eines (jeweils geeigneten) Härters härtende) Reaktiv-Kunstharze, in erster Linie Reaktiv-Kunstharze auf der Basis von Epoxiden und/oder von Isocyanaten, und einer Komponente B, welche den jeweils zugehörigen Härter wie oben und nachfolgend definiert enthält, wobei weitere Zusätze in einer oder beider der Komponenten vorgesehen sein können, vorzugsweise eine Zwei- oder ferner Mehrkammervorrichtung, zu verstehen, worin die miteinander reaktionsfähigen Komponenten (A) und (B) und ggf. weitere separate Komponenten so enthalten sind, dass ihre Bestandteile während der Lagerung nicht (insbesondere nicht unter Aushärtung) miteinander reagieren können, vorzugsweise so, dass ihre Bestandteile vor der Anwendung nicht miteinander in Berührung kommen, das es jedoch ermöglicht, die Komponenten (A) und (B) und gegebenenfalls weitere Komponenten zur Befestigung an der gewünschten Stelle, beispielsweise direkt vor oder in einem Loch, so zu vermischen und erforderlichenfalls einzubringen, dass dort die Härtungsreaktion stattfinden kann. Auch geeignet sind Patronen, beispielsweise aus Kunststoff, Keramik oder insbesondere Glas, in denen die Komponenten durch (beispielsweise bei Eintreiben eines Verankerungselements in ein Loch oder einen Spalt, wie ein Bohrloch) zerstörbare Abgrenzungswandungen oder integrierte separate zerstörbare Behältnisse voneinander getrennt angeordnet sind, beispielsweise als ineinander verschachtelte Patronen, wie Ampullen; sowie insbesondere Mehr- oder insbesondere Zweikomponenten¬kar¬tuschen (die ebenfalls besonders bevorzugt sind), in deren Kammern die mehreren oder vorzugsweise zwei Komponenten (insbesondere (A) und (B)) des erfindungsgemäßen Befestigungskunstmörtelystems mit oben und nachstehend genannten Zusammensetzungen zur Aufbewahrung vor der Nutzung enthalten sind, wobei vorzugsweise auch ein Statikmischer zum entsprechenden Kit gehört.

Insbesondere handelt es sich um Zwei-Komponentensysteme, in denen das Gewichtsverhältnis von Komponente A zu Komponente B bei 99 : 1 bis 1 : 99, bei 99 : 1 bis 50 : 50, bei 99 : 1 bis 60 : 40 oder bei 99 : 1 bis 70 : 30 liegt.

Die erfindungsgemäßen Befestigungskunstmörtelsysteme (vorzugsweise Befestigungskunstmörtelkits) können folglich vorzugsweise als Zwei- oder Mehr-Komponentensysteme (Mehrkomponentenkit) vorgesehen sein und auch verwendet werden. Zweikomponentige Systeme können auch solche sein, die eine Komponente z.B. in verkapselter Form in der anderen Komponente beinhalten.

Die Verwendung eines erfindungsgemäßen Befestigungskunstmörtelsystems am gewünschten Einsatzort erfolgt durch Mischen der zugehörigen (vor Mischung reaktionshemmend separierten) Komponenten, insbesondere nahe bei und/oder direkt vor einem Loch oder (beispielsweise insbesondere bei Verwendung von Kartuschen mit Statikmischern) direkt vor und/oder (insbesondere beim Zerstören entsprechender Patronen oder Ampullen) innerhalb eines Loches oder Spaltes, z.B. einem Bohrloch.

Unter "Einmörteln" ist insbesondere eine (stoff- und/oder formschlüssige) Befestigung von Verankerungsmitteln aus Metall (z.B. Hinterschneidanker, Gewindestangen, Schrauben, Bohranker, Bolzen) oder ferner aus einem anderen Material, wie Kunststoff oder Holz, in festen (vorzugsweise bereits als solche fertiggestellten) Substraten, wie Beton oder Mauerwerk, insbesondere, soweit sie Bestandteile von künstlich errichteten Bauwerken sind, vor allem Mauerwerk, Decken, Wände, Böden, Platten, Pfeilern oder dergleichen (z.B. aus Beton, Naturstein, Mauerwerk aus Vollsteinen oder Lochsteinen, ferner Kunststoff oder Holz), insbesondere in Löchern, wie Bohrlöchern, zu verstehen. Mittels dieser Verankerungsmittel können dann beispielsweise Geländer, Abdeckungselemente, wie Platten, Fassadenelemente oder andere Bauelemente befestigt werden.

Wo von "Gemischen von zwei oder mehr davon" die Rede ist, beinhaltet dies insbesondere Gemische von mindestens einem der genannten Bestandteile, die als bevorzugt hervorgehoben sind, mit ein oder mehreren anderen, insbesondere ein oder mehreren ebenfalls als bevorzugt gekennzeichneten Bestandteilen.

"Als solche fertiggestellt" bedeutet insbesondere, dass die Substrate bis auf mögliche Oberflächenmodifikationen (wie Beschichtung, z.B. Verputzen oder Lackieren) oder dergleichen bereits fertiggestellt (z.B. als Bausteine oder Mauern) und nicht erst gleichzeitig mit dem Verklebungsmittel fertiggestellt werden oder aus diesem bestehen. Mit anderen Worten: Das Verklebungsmittel ist dann nicht selbst bereits fertiggestelltes Substrat.

Die Einbringung des oder der Verankerungsmittel(s) erfolgt vorzugsweise bereits kurze Zeit, vorzugsweise 30 Minuten oder weniger, nach dem Mischen der Komponenten des erfindungsgemäßen Befestigungsmörtels. Zur Erläuterung: Mit der Mischung und Einbringung der Komponenten auf oder in die gewünschten Stellen, an denen Verankerungsmittel befestigt werden sollen, beginnen mehrere, im Wesentlichen parallel und/oder nur mit geringer zeitlicher Versetzung ablaufende, zur Aushärtung führende Reaktionen.

Spezifische Ausführungsformen der Erfindung betreffen auch die in den Ansprüchen und der Zusammenfassung aufgeführten Varianten - die Ansprüche und die Zusammenfassung werden hier daher durch Bezugnahme aufgenommen.

Die erfindungsgemäß verwendbaren oligomeren Siloxane können nach oder in Analogie zu an sich bekannten Verfahren hergestellt werden.

Alternativ können sie während der Lagerung der verpackten erfindungsgemäßen Befestigungskunstmörtelsysteme und/oder während dem Mischen der Bestandteile zur Herstellung einer Komponente z.B. der Komponente B der erfindungsgemäßen Befestigungskunstmörtelsysteme *in situ* bei Gegenwart von Wasser (beispielsweise einer vorbestimmten Menge in einer die Ausgangssilane beinhaltenden Komponente) hergestellt werden oder entstehen.

Die Synthese der Siloxanoligomere erfolgt beispielsweise analog den Vorschriften in der DE 10 2011 086 862 A1, beispielsweise durch Umsetzung einer Verbindung oder mehrerer Verbindungen der Formel II

$$(R^1O)(R^1O)_{\{3-(a+e)\}}(R^2)_aSi(A)_e \qquad (II)$$

worin $R^1$, $R^2$, a, A und e wie oben für Verbindungen der Formel I definiert sind,
mit Verbindungen der Formel III,

$$Si(B)_e(R^4)_d(OR^3)_{\{3-(d+e\}}OR^3 \qquad (III)$$

worin $R^3$, $R^4$, d, B und e wie oben für Verbindungen der Formel I definiert sind,
(wobei die Verbindungen der Formeln II und III identisch oder unterschiedlich voneinander sein können)
und gewünschtenfalls (wenn c in Formel I gleich 1 oder größer sein soll) mit Verbindungen der Formel IV

$$Si(Y^*)_4 \qquad (IV)$$

worin Y* für $OR^5$ und/oder $R^5$ steht, worin $R^5$ wie oben für Verbindungen der Formel I definiert ist,
mit Wasser in einem definierten molaren Verhältnis von Wasser zu Alkoxygruppen der Akoxysilane derart, dass - wie in Formel I dargestellt - hydrolysierbare Alkoxygruppen (beispielsweise $R^1O$ und/oder $R^3O$) übrig bleiben.

Die allgemeine Menge des benötigten Wassers zur Einstellung einer gewünschten Absättigung der Alkoxygruppen kann beispielsweise (bei Fehlen von Verbindungen der Formel (IV)) nach folgender Formel berechnet werden:

$$n \text{ (Wasser)} = [n \text{ (Moleküle Formel II)} \times (4 - (a + e)) + n \text{ (Moleküle Formel III)} \times (4 - (d + e))]$$

$$\times \text{ gewünschte Absättigung in \% } / 100 \times 0{,}5.$$

(n entspricht jeweils der molaren Menge in Mol; die 0,5 am Ende bedeuten, dass nur halb so viele Mole Wasser zugesetzt werden müssen wie Mole hydrolysierbare (z.B. Alkoxy-) Gruppen der Edukte der Formel II und III, da nach der Hydrolyse von einer hydrolysierbaren bzw. (Alkoxy-)Gruppe der Verbindung der Formel II <u>oder</u> der Formel III pro 1 Mol davon 1 Mol Wasser verbraucht und bei der Kondensation der Silanolgruppen (hydrolysierte Alkoxygruppe) je zwei Mol Silanolgruppen der Formel II und/oder III dann wieder 1 Mol Wasser abgespalten wird).

In einer möglichen bevorzugten Ausführungsform der Erfindung ist (bei durchschnittlicher Betrachtung) b + c + f gleich oder größer als 2,000, z.B. 2,000 bis 70,000, was zu besonders niederviskosen Siloxanoligomeren führt.

In einer speziellen und stark bevorzugten Ausführungsform ist das Siloxanoligomer aus Aminopropyltrimethoxysilan und/oder Aminopropyltriethoxysilan nach Formel (IA) aufgebaut, wobei 30,000 > b gleich oder insbesondere größer 2,000 ist:

$$(R^1O)[(R^1O)_{(2-e)}(R^2)_aSi(A)_eO]_b\text{-}R^1 \qquad (IA)$$

In einer weiteren möglichen und besonders bevorzugten Ausführungsform der Erfindung ist bei mehr als 50 % (bei durchschnittlicher Betrachtung) der Siloxanoligomere in Formel I b + c + f gleich oder größer als 2, bevorzugt > 3 und insbesondere bevorzugt > 4, wobei gleichzeitig keine einzelne Spezies der Oligomermischung einen Anteil > 50 % aufweist. Weiterhin ist es günstig, wenn in Formel I (bei wiederum durchschnittlicher Betrachtung) b + c + f < 70, insbesondere < 50 und ganz besonders bevorzugt < 30 ist.

In einer weiteren möglichen speziellen und stark bevorzugten Ausführungsform ist das Siloxanoligomer mit Strukturelementen der Formel IA aus Aminopropyltrimethoxysilan und/oder Aminopropyltriethoxysilan als Edukt(en) so aufgebaut, dass bei mehr als 50 % (bei durchschnittlicher Betrachtung) der Siloxanoligomere b gleich oder größer als 2,000, bevorzugt > 3 und insbesondere bevorzugt > 4 ist, wobei gleichzeitig keine einzelne Spezies der Oligomermischung einen Anteil > 50 % aufweist. Weiterhin ist es günstig, wenn (bei wiederum durchschnittlicher Betrachtung) b < 70, insbesondere < 50 und ganz besonders bevorzugt < 10 ist.

Beispielhaft kann wie folgt vorgegangen werden: In einem Reaktionskolben werden das oder die Silane der Formeln II, III und ggf. IV vorgelegt und anschließend Wasser, welches vorher mit einem Katalysator und einem Lösemittel vermischt wurde, bei Raumtemperatur und Normaldruck langsam zu dosiert. Nach vollständiger Zugabe der Lösung (Wasser/Katalysator/ Lösemittel) wird das Gemisch zum Sieden erhitzt und ungefähr 4 - 6 Stunden unter leichtem Rückfluss gehalten. Anschließend wird der größte Teil des Lösemittels und des Katalysators unter Normaldruck abdestilliert. Danach werden unter Anlegen von Vakuum bei bis zu 100 mbar die Reste an Lösemittel und Katalysator entfernt. Der erhaltene Sumpf ist das Siloxanoligomer.

Die nachfolgenden Beispiele dienen der Illustration der Erfindung, ohne ihren Umfang einzuschränken.

Beispiel 1: Synthese eines 3-Aminopropylsiloxanoligomeren mit 45 % Absättigung der Alkoxygruppen

150 g 3-Aminopropyltrimethoxysilan (Dynasilan® AMMO ; Evonik Industries GmbH, Essen, Deutschland) wurden in einem Reaktionskolben vorgelegt. 75 g Methanol (Lösemittel) wurden mit 10,00 g Wasser und 0,20 g HCl 37 %ig (Katalysator) gemischt und in einen Tropftrichter überführt. Bei Raumtemperatur und Normaldruck wurde aus dem Tropftrichter langsam unter Rühren zu dem 3-Aminopropyltrimethoxysilan zugetropft. Nach beendeter Zugabe wurde das Ölbad auf 80 - 100 °C erhitzt, so dass das Methanol unter Rückfluss siedete. Nach 4 - 6 h wurde das Methanol weitestgehend abdestilliert. Danach wurde unter Anlegen von Vakuum bei langsam fallenden Druck auf bis zu 100 mbar die Reste an Methanol und HCl entfernt. Nach Erreichen der 100 mbar wurde dieser noch 15 Minuten gehalten. Der erhaltene Sumpf war ein 3-Aminopropylsiloxanoligomer mit mindestens noch 55 % hydrolysierbaren Restmethoxygruppen.

Gesamtrezeptur:

| Bezeichnung | Einwaage [g] |
|---|---|
| AMMO | 150,00 |
| Wasser | 10,00 |
| HCl 37%ig | 0,20 |
| Methanol* | 75,00 |
| *Wassergehalt: 0,05% | |

Das nach Beispiel 1 hergestellte Siloxanoligomer weist einen mittleren Polymerisationsgrad von 3,0 auf (vereinfachte Rechnung, dient lediglich zur Veranschaulichung):

$$n \text{ (AMMO)} / [n \text{ (AMMO)} - n \text{ (Wasser)}] = 0{,}837 \text{ mol} / [0{,}837 \text{ mol} - 0{,}565 \text{ mol}] = 3{,}07$$

mit n (Wasser): n (AMMO) x 3 x gewünschte Absättigung in % / 100 x 0,5.

VOC Berechnung + Reduktion - anhand von Beispiel 1:

Fall a: Einsatz von monomerem AMMO

In Beispiel 1 werden 150 g AMMO eingesetzt:

| Bezeichnung | m [g] | M [g/mol] | n [mol] |
|---|---|---|---|
| AMMO | 150,00 | 179,29 | 0,837 |
| Methoxy | | | 2,510 |
| MeOH$_{AMMO}$ | 80,42 | 32,00 | 2,510 |

Dementsprechend errechnet sich der VOC-Gehalt:

$$m \, (MeOH_{AMMO}) \, / \, m \, (AMMO) \times 100 = \% \, VOC$$

Bei Einsatz von monomerem AMMO beträgt der VOC- Gehalt (Monomer): 53,61 % ~ 54 % (gerundet)

Fall b: Einsatz von oligomerisiertem AMMO gemäß Bsp. 1

In Beispiel 1 werden 150 g AMMO mit 10,17 g Wasser oligomerisiert:

| Bezeichnung | m [g] | M [g/mol] | n [mol] |
|---|---|---|---|
| AMMO | 150,00 | 179,29 | 0,837 |
| Wasser | 10,17 | 18,00 | 0,565 |
| hydrolysiertes Methoxy | | | 1,129 |
| MeOH$_{OUT}$* | 36,19 | 32,00 | 1,129 |
| *MeOH$_{OUT}$: durch Hydrolyse entnommenes Methanol | | | |

Daraus ergibt sich:

In Oligomer gebundenes Methanol (m(MeOH$_{Oligomer}$)):

$$m \, (MeOH_{Oligomer}) = m \, (MeOH_{AMMO}) - m \, (MeOH_{OUT}) = 44,23 \, g$$

$$Masse \; m \, (Oligomer) = m \, (AMMO) - m \, (MeOH_{OUT}) + m \, (Wasser) = 123,98 \, g$$

Dementsprechend errechnet sich der VOC-Gehalt (Oligomer):

$$m \, (MeOH_{Oligomer}) \, / \, m \, (Oligomer) \times 100 = 35,68 \, \% \sim 36 \, \% \, (gerundet)$$

Dies entspricht einer VOC-Reduktion von:

[VOC-Gehalt (Monomer) – VOC-Gehalt (Oligomer)] / VOC-Gehalt (Monomer) x 100 = 33,46 %.

Beispiel 2: Synthese eines 3-Aminopropyl-/Mercaptopropylsiloxancooligomeren mit 40 % Absättigung der Alkoxygruppen

60 g Dynasilan® AMMO und 60 g 3-Mercaptopropyltrimethoxysilan (Dynasilan® MTMO; Evonik Industries GmbH, Essen, Deutschland) wurden in einem Reaktionskolben vorgelegt. 60 g Methanol (Lösemittel) wurden mit 6,79 g Wasser und 0,16 g HCl 37 %ig (Katalysator) gemischt und in einen Tropftrichter überführt. Bei Raumtemperatur und Normaldruck wurde diese Mischung aus einem Tropftrichter langsam unter Rühren zu dem 3-Aminopropyltrimethoxysilan-/Mercaptopropyltrimethoxysilan-Gemisch zugetropft. Nach beendeter Zugabe wurde das Ölbad auf 80 - 100 °C erhitzt, so dass das Methanol unter Rückfluss siedete. Nach 4 - 6 h wurde das Methanol weitestgehend abdestilliert. Danach wurde unter Anlegen von Vakuum bei langsam fallenden Druck auf bis zu 100 mbar die Reste an Methanol und HCl entfernt. Nach Erreichen der 100 mbar wurde dieser noch 15 Minuten gehalten. Der erhaltene Sumpf war ein 3-Aminopropyl-/Mercaptopropylsiloxancooligomer mit mindestens noch 60 % hydrolysierbaren Restmethoxygruppen.

Gesamtrezeptur:

| Bezeichnung | Einwaage [g] |
|---|---|
| AMMO | 60,00 |
| MTMO | 60,00 |
| Wasser | 6,79 |
| HCl 37%ig | 0,16 |
| Methanol* | 60,00 |
| *Wassergehalt: 0,05% | |

Das nach Beispiel 2 hergestellte Siloxancooligomer weist einen mittleren Polymerisationsgrad von 2,5 auf (vereinfachte Rechnung; dient lediglich zur Veranschaulichung):

$$(n\ (AMMO) + n\ (MTMO)) / [(n\ (AMMO) + n\ (MTMO)) - n\ (Wasser)] = 0,640\ mol\ / [0,640\ mol - 0,384\ mol] = 2,50$$

mit n (Wasser): (n (AMMO) + n (MTMO)) x 3 x gewünschte Absättigung in % / 100 x 0,5.

Beispiel 3: Befestigungskunstmörtelsystem auf Basis von oligomerem Härter

Komponente A:

| Rohstoff | Gehalt [%] |
|---|---|
| Bisphenol-A/F-Epichlorhydrinharz | 45 |
| Trimethylolpropantriglycidylether | 15 |
| Weißer Portlandzement | 35 |
| Versch. Additive, Pigmente und Rheologiehilfsmittel | 5 |

Die Komponente A hat eine Viskosität von 75.000 mPa*s (Brookfield Sp. 7 bei 23 °C).

Komponente B:

| Rohstoff | Gehalt [%] |
|---|---|
| Mannichbasenformulierung | 61 |
| 3-Aminopropylsiloxanoligomer aus Beispiel 1 | 26 |
| Weißer Portlandzement | 7 |
| Versch. Additive, Pigmente und Rheologiehilfsmittel | 6 |

Die Komponente B hat eine Viskosität von 55.000 mPa*s (Brookfield Sp. 7 bei 23 °C).

Die Komponenten werden mit einer handelsüblichen 2-Kammer-Kartusche mit Statikmischer analog den in der Leitlinie von der "European Organisation for Technical Approvals" (EOTA) (2001): ETAG N°001 Ausgabe November 2006, Leitlinie für die europäische technische Zulassung für Metalldübel zur Verankerung im Beton, Teil 5: Verbunddübel, Februar 2008, unter 5.1.2.1 (b) beschriebenen Bedingungen einem Adhäsionsversagenstest unterzogen. Der Mittelwert der Adhäsionsversagenslast aus 5 Versuchen für M12 Bolzen bei einer Verankerungstiefe von 72 mm beträgt 90,5 kN.

**Patentansprüche**

1. Härterzusammensetzung für ein durch Additionspolymerisation härtbares Befestigungskunstmörtelsystem zum Einmörteln von Verankerungsmitteln in Löcher oder Spalten, wobei die Härterzusammensetzung oligomere Siloxane mit im Durchschnitt pro Molekül mindestens einem, eine oder mehrere bei der Additionsreaktion mit Isocyanat- oder Epoxygruppen reaktive sekundäre und/oder primäre Amino- und/oder Thiolgruppen tragenden organischen Rest und mit im Durchschnitt pro Molekül ein oder mehr hydrolysierbaren Gruppen beinhaltet und daneben ein oder mehrere weitere übliche Zusätze beinhalten kann.

2. Härterzusammensetzung nach Anspruch 1, **dadurch gekennzeichnet, dass** die oligomeren Siloxane mit Amino- und/oder Thiolgruppen funktionalisierte Siloxanoligomere sind, die je Oligomer-Molekül mindestens zwei oder mehrere Amino- und/oder Thiolgruppen sowie mindestens eine, vorzugsweise mindestens zwei hydrolysierbare an Silicium gebundene Gruppen aufweisen und Si-O-vernetzte Strukturelemente aufweisen, die mindestens eine Struktur ausgewählt aus kettenförmigen, cyclischen, vernetzten und gegebenenfalls raumvernetzten Strukturen ausbilden.

3. Härterzusammensetrzung nach Anspruch 1 oder Anspruch 2, **dadurch gekennzeichnet, dass** die oligomeren Siloxane mindestens eine Struktur in idealisierter Form der allgemeinen Formel (I) beinhalten,

$$(R^1O)[(R^1O)_{\{2-(a+e)\}}(R^2)_aSi(A)_eO]_b-[Si(Y)_2O]_c-[Si(B)_e(R^4)_d(OR^3)_{\{2-(d+e)\}}O]_fR^3 \qquad (I)$$

wobei die Strukturelemente sich von Alkoxysilanen ableiten und

A und B jeweils unabhängig voneinander mindestens eine (primäre oder sekundäre) Amino- und/oder Thiolgruppe beinhaltendes (vorzugsweise $C_1$-$C_7$-) Alkyl bedeuten;
Y für $OR^5$ und/oder $R^5$ steht oder in vernetzten und gegebenenfalls raumvernetzten Strukturen unabhängig voneinander $OR^5$, $R^5$ oder $O_{0,5}$ bedeutet, vorzugsweise ist Y gleich $OR^5$;
die Reste $R^1$, $R^2$, $R^3$, $R^4$ und $R^5$, jeweils für sich und untereinander unabhängig voneinander, einen unsubstituierten oder substituierten - gegebenenfalls Heteroatome aufweisenden - linearen, verzweigten oder cyclischen Alkylrest mit 1 bis 20 Kohlenstoffatomen bedeuten; und a, b, c, d, e und f, bezogen auf eine Struktureinheit, unabhängig voneinander ganze Zahlen bedeuten, wobei
a gleich unabhängig voneinander 0 oder 1 oder 2,
b gleich 1 oder größer;
c gleich 0 oder größer;
d gleich unabhängig voneinander 0 oder 1 oder 2;
e gleich unabhängig voneinander 1 oder 2; und
f gleich 0 oder größer ist, vorzugsweise gleich 1 oder größer;
mit der Maßgabe, dass b + c + f gleich oder größer als 2, beispielsweise gleich 2,001 oder größer ist.

4. Härterzusammensetzung nach einem der Ansprüche 1 bis 3, **dadurch gekennzeichnet, dass** die oligomeren Siloxane Strukturelemente der in Anspruch 3 genannten Formel (I) beinhalten, worin A und B 3-Aminopropyl, 3-Aminopropyl-methyl, N-(2-Aminoethyl)-3-aminopropyl, N-(2-Aminoethyl)-3-aminopropyl-methyl, N-Cyclohexyl-3-aminopropyl, N-Cyclohexylaminomethyl, N-Phenylaminomethyl, N-Cyclohexylaminomethyl, N-Cyclohexylaminoethyl-methyl, 3-[2-(2-Aminoethylamino)ethylamino]propyl und/oder 3-Mercaptopropyl bedeuten und die übrigen Symbole die in Anspruch 3 genannten Bedeutungen haben.

5. Durch Additionspolymerisation härtbares Befestigungskunstmörtelsystem, beinhaltend eine Härterzusammensetzung nach einem der Ansprüche 1 bis 4 und ein härtbares Reaktiv-Kunstharz auf Epoxid- und/oder Isocyanatbasis.

6. Befestigungskunstmörtelsystem nach Anspruch 5, **dadurch gekennzeichnet, dass** der Anteil der Härterzusammensetzung 10 bis 80, beispielsweise von 25 bis 70 Gew.-%, beträgt.

7. Befestigungskunstmörtelsystem nach Anspruch 5 oder Anspruch 6, **dadurch gekennzeichnet, dass** ein härtbares Reaktivkunstharz auf Epoxidbasis beinhaltet ist.

8. Befestigungskunstmörtelsystem nach einem der Ansprüche 5 bis 7, **dadurch gekennzeichnet, dass** das härtbare Reaktivkunstharz auf Epoxidbasis ausgewählt ist aus solchen auf Basis von Glycidylverbindungen, beispielsweise solchen mit einer durchschnittlichen Glycidylgruppenfunktionalität von 1,5 oder größer, insbesondere von 2 oder größer, z.B. von 2 bis 10, die optional weitere(n) Glycidylether als Reaktivverdünner beinhalten können, vorzugsweise um Poly(einschließlich Di)-glycidylether von mindestens einem mehrwertigen Alkohol oder Phenol, wie Novolak, Bisphenol F oder Bis-phenol A, oder Gemische solcher Epoxide, beispielsweise erhältlich durch Umsetzung der entsprechenden mehrwertigen Alkohole mit Epichlorhydrin, beispielswerise Trimethylolpropan-triglycidylether, Novolak-Epoxidharze, Bisphenol-A-Epichlorhydrinharze und/oder Bisphenol-F-Epichlor¬hydrinharze.

9. Befestigungskunstmörtelsystem nach Anspruch 5 oder Anspruch 6, **dadurch gekennzeichnet, dass** ein härtbares Reaktivkunstharz auf Isocyanatbasis beinhaltet ist.

10. Befestigungskunstmörtelsystem nach einem der Ansprüche 5 bis 6 oder 9, **dadurch gekennzeichnet, dass** das härtbare Reaktivkunstharz auf Isocyanatbasis ausgewählt ist aus in der Polyurethan- und/oder Polyharnstoffchemie üblichen monomeren und/oder oligomeren und/oder polymeren, z.B. mehrkernigen, Mono-, Di-, oder Polyisocyanaten und Isocyanat-Präpolymeren, insbesondere aus Aryl-di- oder Arylpolyisocyanaten, aliphatischen, cycloaliphatischen oder anderen als den bereits genannten aromatischen Di- oder Poly-, vor allem Di-, Tri- oder Tetra-isocyanaten und insbesondere aus Präpolymeren mit zwei oder mehr Isocyanatogruppen, vorzugsweise solchen, die durch Reaktion ausgehend von Di- oder Polyisocyanaten mit jeweils di- oder höherfunktionalen Alkoholen, Aminen oder Aminoalkoholen, oder Gemischen von zwei oder mehr davon, entstehen, wobei anstelle oder zusätzlich zu den jeweils di- oder höherfunktionalen Alkoholen oder Aminoalkoholen auch deren Thioanaloge vorliegen können, wobei die Isocyanate auch mindesatens teilweise in Form mindestens teilweise durch Reaktion untereinander als Biuret-, Allophanat-, Uretdion-, Isocyanurat-, Iminooxadiazindion- und/oder Uretonimin-Gruppen vorliegender Isocyanatreste tragender Harze vorliegen können.

11. Befestigungskunstmörtelsystem nach einem der Ansprüche 5 bis 10, **dadurch gekennzeichnet, dass** darin neben der Härterzusammensetzung weitere Härter beinhaltet sein können, insbesondere ausgewählt aus

   - Di- oder Polyaminen wie insbesondere aliphatische, heteroaliphatischen, cycloaliphatischen, araliphatischen und aromatischen Di- oder Polyaminen, Amidoaminen, Aminaddukten, Polyetherdiaminen oder Polyphenyl/Polymethylen-polyaminen, Mannich-Basen, alleine oder im Gemisch mit ein oder mehreren weiteren Di- oder Polyaminen, Polyamiden;
   - Di- oder Polythiolen z.B.: ethoxylierte und/oder propoxylierte Alkohole aus Mono-, Di-, Tri-, Tetra-, Pentaolen und/oder anderen Polyolen mit Thiolendgruppen und/oder Estergruppen beinhaltenden Thiolen.

12. Befestigungskunstmörtelsystem nach einem der Ansprüche 5 bis 11, **dadurch gekennzeichnet, dass** es sich um ein Mehr-, insbesondere Zweikomponentensystem handelt, vorzugsweise in Form eines Kits.

13. Verwendung eines Befestigungskunstmörtelsystems nach einem der Ansprüche 5 bis 12 zum Einmörteln von Verankerungsmitteln in Löcher und Spalten.

14. Verfahren oder Methoden zum Befestigen von Verankerungselementen in Löchern oder Spalten, bei dem oder den ein Befestigungskunstmörtelsystem nach einem der Ansprüche 5 bis 12 und ein Verankerungsmittel nacheinander, insbesondere zuerst das Befestigungskunstmörtelsystem, dann das Verankerungsmittel, oder mindestens im Wesentlichen gleichzeitig in ein Loch oder einen Spalt in einem Substrat eingebracht werden.

15. Verwendung einer Härterzusammensetzung nach einem der Ansprüche 1 bis 4 zur Herstellung eines Befestigungskunstmörtelsystems nach einem der Ansprüche 5 bis 12, insbesondere **dadurch gekennzeichnet, dass** die Härterzusammensetzung und ein durch Additionshärtung härtbares Reaktiv-Kunstharz, insbesondere auf Epoxid-und/oder Isocyanatbasis, als Bestandteil von Komponenten eines Mehr-, insbesondere ZweiKomponentensystems, bereitgestellt werden, oder die Verwendung der besagten Härterzusammensetzung als Härtersystem für besagtes Befestigungskunstmörtelsystem.

**Claims**

1. Hardener composition for an addition-polymerisation-curable synthetic fixing mortar system for embedding anchoring means in mortar in holes or crevices, wherein the hardener composition includes oligomeric siloxanes having on average per molecule at least one organic radical that carries one or more secondary and/or primary amino and/or thiol groups that react with isocyanate or epoxy groups in the addition reaction and having on average per molecule one or more hydrolysable groups, and, in addition, can include one or more further customary additives.

2. Hardener composition according to claim 1, **characterised in that** the oligomeric siloxanes are siloxane oligomers which are functionalised with amino and/or thiol groups and which have per molecule of oligomer at least two or more amino and/or thiol groups and at least one, preferably at least two, hydrolysable groups bonded to silicon and have Si-O-crosslinked structural elements which form at least one structure selected from chain-like, cyclic, crosslinked and optionally three-dimensionally crosslinked structures.

3. Hardener composition according to claim 1 or claim 2, **characterised in that** the oligomeric siloxanes include at least one structure in idealised form of the general formula (I),

$$(R^1O)[(R^1O)_{\{2-(a+e)\}}(R^2)_aSi(A)_eO]_b-[Si(Y)_2O]_c-[Si(B)_e(R^4)_dOR^3]_{\{2-(d+e)\}}O]_fR^3 \qquad (I)$$

wherein the structural elements are derived from alkoxysilanes and

A and B each independently of the other are (preferably $C_1$-$C_7$)alkyl that includes at least one (primary or secondary) amino and/or thiol group;
Y denotes $OR^5$ and/or $R^5$ or, in crosslinked and optionally three-dimensionally crosslinked structures, independently of any other denotes $OR^5$, $R^5$ or $O_{0.5}$; preferably Y is $OR^5$;
the radicals $R^1$, $R^2$, $R^3$, $R^4$ and $R^5$, each on its own and independently of one another, denote an unsubstituted or substituted - optionally hetero-atom-containing - linear, branched or cyclic alkyl radical having from 1 to 20 carbon atoms;
and a, b, c, d, e and f, based on a structural unit, independently of one another denote whole numbers, wherein
a independently of any other is 0 or 1 or 2;
b is 1 or more;
c is 0 or more;
d independently of any other is 0 or 1 or 2;
e independently of any other is 1 or 2; and
f is 0 or more, preferably 1 or more;
with the proviso that b + c + f is 2 or more, for example 2.001 or more.

4. Hardener composition according to any one of claims 1 to 3, **characterised in that** the oligomeric siloxanes include structural elements of the formula (I) mentioned in claim 3, wherein A and B are 3-aminopropyl, 3-aminopropyl-methyl, N-(2-aminoethyl)-3-aminopropyl, N-(2-aminoethyl)-3-aminopropyl-methyl, N-cyclohexyl-3-aminopropyl, N-cyclohexylaminomethyl, N-phenylaminomethyl, N-cyclohexylaminomethyl, N-cyclohexylaminomethyl-methyl, 3-[2-(2-aminoethylamino)ethylamino]propyl and/or 3-mercaptopropyl and the other symbols are as defined in claim 3.

5. Synthetic fixing mortar system hardenable by addition polymerisation, including a hardener composition according to any one of claims 1 to 4 and a hardenable epoxy- and/or isocyanate-based reactive synthetic resin.

6. Synthetic fixing mortar system according to claim 5, **characterised in that** the proportion of hardener composition is from 10 to 80 % by weight, for example from 25 to 70 % by weight.

7. Synthetic fixing mortar system according to claim 5 or claim 6, **characterised in that** a hardenable epoxy-based reactive synthetic resin is included.

8. Synthetic fixing mortar system according to any one of claims 5 to 7, **characterised in that** the hardenable epoxy-based reactive synthetic resin is selected from those based on glycidyl compounds, for example those having an average glycidyl group functionality of 1.5 or greater, especially of 2 or greater, for example from 2 to 10, which can optionally include further glycidyl ether(s) as reactive diluent, preferably poly(including di)-glycidyl ethers of at least one polyvalent alcohol or phenol, such as novolak, bisphenol F or bisphenol A, or mixtures of such epoxides, for example obtainable by reaction of the corresponding polyvalent alcohols with epichlorohydrin, for example trimethylolpropane triglycidyl ether, novolak epoxy resins, bisphenol A epichlorohydrin resins and/or bisphenol F epichlorohydrin resins.

9. Synthetic fixing mortar system according to claim 5 or claim 6, **characterised in that** a hardenable isocyanate-based reactive synthetic resin is included.

10. Synthetic fixing mortar system according to any one of claims 5 to 6 or 9, **characterised in that** the hardenable isocyanate-based reactive synthetic resin is selected from monomeric and/or oligomeric and/or polymeric, for example polynuclear, mono-, di- or poly-isocyanates and isocyanate prepolymers customary in polyurethane and/or polyurea chemistry, especially from aryl-di- or aryl-poly-isocyanates, aliphatic di- or poly-isocyanates, cycloaliphatic di- or poly-isocyanates or di- or poly-isocyanates other than the aromatic ones already mentioned, especially di-, tri- or tetraisocyanates, and especially from prepolymers having two or more isocyanato groups, preferably those formed by reaction starting from di- or poly-isocyanates with as appropriate difunctional or higher functional alcohols, amines or amino alcohols, or mixtures of two or more thereof, wherein instead of or in addition to the, as appropriate, difunctional or higher functional alcohols or amino alcohols it is also possible for the thio analogues thereof to be present, it being possible for the isocyanates also to be present at least partly in the form of resins carrying isocyanate radicals at least some of which are in the form of biuret, allophanate, uretdione, isocyanurate, iminooxadiazinedione and/or uretonimine groups as a result of reaction with one another.

11. Synthetic fixing mortar system according to any one of claims 5 to 10, **characterised in that**, in addition to the hardener composition, further hardeners can be included therein, especially selected from

   - di- or poly-amines, such as especially aliphatic, heteroaliphatic, cycloaliphatic, araliphatic and aromatic di- or poly-amines, amidoamines, amine adducts, polyether diamines or polyphenyl/polymethylene-polyamines, Mannich bases, alone or in admixture with one or more further di- or poly-amines, polyamides;
   - di- or poly-thiols, for example: ethoxylated and/or propoxylated alcohols of mono-, di-, tri-, tetra-, penta-ols and/or other polyols with thiol end groups and/or thiols that include ester groups.

12. Synthetic fixing mortar system according to any one of claims 5 to 11, **characterised in that** it is a multi-component system, especially a two-component system, preferably in the form of a kit.

13. Use of a synthetic fixing mortar system according to any one of claims 5 to 12 for embedding anchoring means in mortar in holes and crevices.

14. Process or methods for fixing anchoring elements in holes or crevices, in which a synthetic fixing mortar system according to any one of claims 5 to 12 and an anchoring means are introduced successively, especially first the synthetic fixing mortar system and then the anchoring means, or at least substantially simultaneously into a hole or crevice in a substrate.

15. Use of a hardener composition according to any one of claims 1 to 4 for producing a synthetic fixing mortar system according to any one of claims 5 to 12, especially **characterised in that** the hardener composition and a reactive synthetic resin, especially an epoxy- and/or isocyanate-based reactive synthetic resin, hardenable by addition hardening are provided as constituent of components of a multi-component system, especially a two-component system, or the use of the said hardener composition as hardener system for said synthetic fixing mortar system.

**Revendications**

1. Composition de durcisseur pour un système de mortier synthétique de fixation durcissable par polymérisation par addition destiné à sceller dans le mortier des moyens d'ancrage dans des trous ou des fentes, la composition de durcisseur contenant des siloxanes oligomères comprenant en moyenne par molécule au moins un radical organique portant un ou plusieurs groupes amino et/ou thiol secondaires et/ou primaires réactifs lors de la réaction d'addition avec des groupes isocyanate ou époxy, et comprenant en moyenne par molécule un ou plusieurs groupes hydrolysables, et pouvant contenir en outre un ou plusieurs autres additifs usuels.

2. Composition de durcisseur selon la revendication 1, **caractérisée en ce que** les siloxanes oligomères sont des oligomères de siloxane fonctionnalisés avec des groupes amino et/ou thiol, qui comprennent par molécule d'oligomère au moins deux groupes amino et/ou thiol ou plus, ainsi qu'au moins un, de préférence au moins deux groupes hydrolysables reliés au silicium, et comprennent des éléments structuraux à réticulation Si-0, qui forment au moins une structure choisie parmi les structures en forme de chaîne, cycliques, réticulées et éventuellement réticulées dans l'espace.

**3.** Composition de durcisseur selon la revendication 1 ou la revendication 2, **caractérisée en ce que** les siloxanes oligomères contiennent au moins une structure sous forme idéalisée de la formule générale (I)

$$(R^1O)[(R^1O)_{[2-(a+e)]}(R^2)_a Si(A)_a O]_b\text{-}[Si(Y)_2 O]_c\text{-}[Si(B)_a(R^4)_d(OR^3)_{(2-(d+a)}O]_f R^3 \qquad (I)$$

dans laquelle les éléments structuraux dérivent d'alcoxysilanes et

A et B signifient chacun indépendamment l'un de l'autre un alkyle (de préférence en $C_1$-$C_7$) contenant au moins un groupe amino et/ou thiol (primaire ou secondaire) ;

les Y représentent $OR^5$ et/ou $R^5$ ou, dans des structures réticulées et éventuellement réticulées dans l'espace, signifient indépendamment les uns des autres $OR^5$, $R^5$ ou $O_{0,5}$, Y signifiant de préférence $OR^5$ ;

les radicaux $R^1$, $R^2$, $R^3$, $R^4$ et $R^5$ signifient chacun et indépendamment les uns des autres un radical alkyle linéaire, ramifié ou cyclique non substitué ou substitué, comprenant éventuellement des hétéroatomes, de 1 à 20 atomes de carbone ;

et a, b, c, d, e et f signifient indépendamment les uns des autres, par rapport à une unité structurale, des nombres entiers,

les a signifiant indépendamment les uns des autres 0 ou 1 ou 2,

b signifiant 1 ou plus ;

c signifiant 0 ou plus ;

les d signifiant indépendamment les uns des autres 0 ou 1 ou 2 ;

les e signifiant indépendamment les uns des autres 1 ou 2 ; et

f signifiant 0 ou plus, de préférence 1 ou plus ;

à condition que b + c + f soit supérieur ou égal à 2, par exemple supérieur ou égal à 2,001.

**4.** Composition de durcisseur selon l'une quelconque des revendications 1 à 3, **caractérisée en ce que** les siloxanes oligomères contiennent des éléments structuraux de la formule (I) citée dans la revendication 3, dans laquelle A et B signifient 3-aminopropyle, 3-aminopropyl-méthyle, N-(2-aminoéthyl)-3-aminopropyle, N-(2-aminoéthyl)-3-aminopropyl-méthyle, N-cyclohexyl-3-aminopropyle, N-cyclohexylaminométhyle, N-phénylaminométhyle, N-cyclohexylaminométhyle, N-cyclohexylaminométhyl-méthyle, 3-[2-(2-aminoéthylamino)éthylamino]propyle et/ou 3-mercaptopropyle, et les autres symboles ont les significations indiquées dans la revendication 3.

**5.** Système de mortier synthétique de fixation durcissable par polymérisation par addition, contenant une composition de durcisseur selon l'une quelconque des revendications 1 à 4 et une résine synthétique réactive durcissable à base d'époxyde et/ou d'isocyanate.

**6.** Système de mortier synthétique de fixation selon la revendication 5, **caractérisé en ce que** la proportion de la composition de durcisseur est de 10 à 80, par exemple de 25 à 70 % en poids.

**7.** Système de mortier synthétique de fixation selon la revendication 5 ou la revendication 6, **caractérisé en ce qu'**une résine synthétique réactive durcissable à base d'époxyde y est contenue.

**8.** Système de mortier synthétique de fixation selon l'une quelconque des revendications 5 à 7, **caractérisé en ce que** la résine synthétique réactive durcissable à base d'époxyde est choisie parmi celles à base de composés glycidyliques, par exemple celles ayant une fonctionnalité de groupes glycidyliques moyenne de 1,5 ou plus, notamment de 2 ou plus, p. ex. de 2 à 10, qui peuvent éventuellement contenir un ou plusieurs autres éthers glycidyliques en tant que diluants réactifs, de préférence les éthers poly- (y compris di-)glycidyliques d'au moins un alcool ou phénol polyvalent, tel que la novolaque, le bisphénol F ou le bisphénol A, ou les mélanges de tels époxydes, par exemple pouvant être obtenus par mise en réaction des alcools polyvalents correspondants avec de l'épichlorhydrine, par exemple l'éther triglycidylique de triméthylolpropane, les résines d'époxyde de novolaque, les résines d'épichlorhydrine de bisphénol A et/ou les résines d'épichlorhydrine de bisphénol F.

**9.** Système de mortier synthétique de fixation selon la revendication 5 ou la revendication 6, **caractérisé en ce qu'**une résine synthétique réactive durcissabic à base d'isocyanate y est contenue.

**10.** Système de mortier synthétique de fixation selon l'une quelconque des revendications 5 à 6 ou 9, **caractérisé en ce que** la résine synthétique réactive durcissable à base d'isocyanate est choisie parmi les mono-, di- ou polyisocyanates monomères et/ou oligomères et/ou polymères, p. ex. polynucléaires, et les prépolymères d'isocyanate usuels dans la chimie des polyuréthane et/ou des polyurées, notamment parmi les di- ou polyisocyanates d'aryle, les di- ou poly-, notamment di-, tri- ou tétra-isocyanates, aliphatiques, cycloaliphatiques ou aromatiques autres que ceux déjà mentionnés, et notamment parmi les prépolymères contenant deux groupes isocyanato ou plus, de préférence ceux qui sont formés par une réaction partant de di- ou polyisocyanates avec des alcools, des amines ou des aminoalcools chacun bifonctionnels ou d'une fonctionnalité supérieure, ou les mélanges de deux ou plus d'entre eux, à la place ou en plus des alcools ou aminoalcools chacun bifonctionnels ou d'une fonctionnalité supérieure, leurs analogues thio pouvant également être présents, les isocyanates pouvant également se présenter au moins en partie sous la forme de résines portant des radicaux isocyanate présents sous la forme de groupes biuret, allophanate, uretdione, isocyanurate, iminooxadiazine-dione et/ou urétonimine par réaction au moins partielle les uns avec les autres.

11. Système de mortier synthétique de fixation selon l'une quelconque des revendications 5 à 10, **caractérisé en ce que** d'autres durcisseurs peuvent être contenus dans celui-ci en plus de la composition de durcisseur, notamment choisis parmi :

  - les di- ou polyamines, telles que notamment les di- ou polyamines aliphatiques, hétéroaliphatiques, cycloaliphatiques, araliphatiques et aromatiques, les amidoamines, les adduits d'aminés, les polyétherdiamines ou les polyphényl/polyméthylène-polyamines, les bases de Mannich, seules ou en mélange avec une ou plusieurs autres di- ou polyamines, les polyamides ;
  - les di- ou polythiols, p. ex. : les alcools éthoxylés et/ou propoxylés à base de mono-, di-, tri-, tétra-, pentaols et/ou d'autres polyols contenant des groupes terminaux thiol et/ou les thiols contenant des groupes ester.

12. Système de mortier synthétique de fixation selon l'une quelconque des revendications 5 à 11, **caractérisé en ce qu'**il s'agit d'un système multi-, notamment bicomposant, de préférence sous la forme d'un ensemble ou "kit".

13. Utilisation d'un système de mortier synthétique de fixation selon l'une quelconque des revendications 5 à 12 pour sceller dans le mortier des moyens d'ancrage dans des trous et des fontes.

14. Procédé ou méthode pour la fixation d'éléments d'ancrage dans dos trous ou des fontes, selon lequel ou selon laquelle un système de mortier synthétique de fixation selon l'une quelconque des revendications 5 à 12 et un moyen d'ancrage sont introduits successivement, notamment tout d'abord le système de mortier synthétique de fixation, puis le moyen d'ancrage, ou au moins essentiellement simultanément dans un trou ou une fente dans un substrat.

15. Utilisation d'une composition de durcisseur selon l'une quelconque des revendications 1 à 4 pour la fabrication d'un système de mortier synthétique de fixation selon l'une quelconque des revendications 5 à 12, notamment **caractérisée en ce que** la composition de durcisseur et une résine synthétique réactive durcissable par durcissement par addition, notamment à base d'époxyde et/ou d'isocyanate, sont préparées pour être utilisées dans des composants d'un système multi-, notamment bicomposant, ou utilisation de ladite composition de durcisseur en tant que système durcisseur pour ledit système de mortier synthétique de fixation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060135656 A1
- WO 2013174189 A
- WO 02079341 A
- WO 02079293 A
- EP 0645408 B1
- WO 2005090433 A
- DE 102013113465
- EP 0824124 A1
- DE 102011086862 A1

**In der Beschreibung aufgeführte Nicht-Patentliteratur**

- **STANDARDWERK VON LEE H ; NEVILLE K.** Handbook of Epoxy Resins. McGraw-Hill, 1982
- **LEE H ; NEVILLE K.** Handbook of Epoxy Resins. McGraw-Hill, 1982